# EUROPEAN PATENT APPLICATION

(11) **EP 2 073 488 A1**
(43) Date of publication of application: **24.06.2009**
(21) Application number: 07291584.6
(22) Date of filing: 21.12.2007
(51) Int. Cl.: H04L 29/06

(54) **Method and DSLAM for message insertion in an IPTV network content delivery**

(71) Applicant: Alcatel Lucent, 75008 Paris (FR)
(72) Inventor: Miclea, Sorin, 2595 HK Den Haag (NL)
(74) Representative: D'Halleweyn, Nele Veerle Trees Gertrudis

(57) **Abstract**

The present invention relates to a method to insert a multimedia message stream stored on a message server into multimedia content that is streamed by an IPTV network. The present invention further relates to a DSLAM for implementing this method.

According to the present invention, this method is characterized in that said insertion is in response to an insertion request from said message server to said IPTV network.

The present invention further provides a DSLAM to implement the abovementioned invention, said DSLAM being arranged to distribute multimedia content stream received at a first input, which is characterized in that said DSLAM is responsive to an insertion request and comprises a second input and means to insert multimedia content received at said second input into said multimedia content stream in response to said insertion request.

## Description

The present invention relates to a method to insert a multimedia message stream stored on a message server into multimedia content that is streamed by an IPTV network. The present invention further relates to a DSLAM for implementing this method.

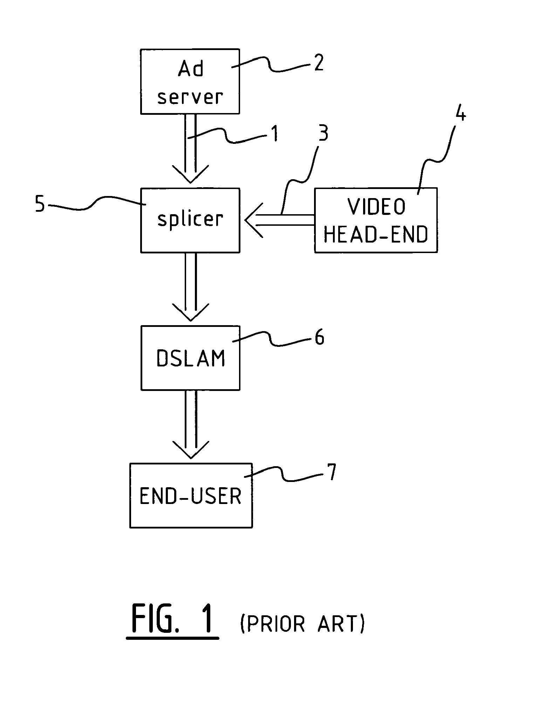

Ad-insertion is a technique to insert a multimedia stream, in this case an advertisement, in a stream broadcasted by an IPTV network. This technique, shown in figure 1, is known in the art. In this technique, an advertisement stream 1 is stored on a advertisement server 2. The regular stream 3 broadcasted by video head-end 4 is provided with markers to indicate the places in the stream where the advertisement stream 1 can be inserted. For instance, a movie can be provided with markers prior to transmission. Usually, a start and end marker will be provided. A splicer 5 in the network is able to detect these markers and to insert the advertisement stream 1 from the advertisement server 2 in between the detected markers. The insertion could comprise the actual replacement of packets or it could comprise the switching between the different streams. The splicer 5 is connected to a DSLAM 6 which serves multiple end-users 7. The end-user will therefore not see the message that is present in the original broadcasted stream 3 but the message from the advertisement server. In this way, advertisments can be directed to specific users based on location, type of subscription etc.

A problem with the abovementioned technique is that it relies on markers in the original stream. The original stream already indicates the places in time where the advertisement can be inserted. If a different type of message needs to be inserted, for instance an emergency message, it can only be inserted at those specific times. Moreover, the duration between start and end time is also prescribed by the markers.

The object of the present invention is provide a method to insert a multimedia message stream stored on a message server into multimedia content that is streamed by an IPTV network, in which the abovestated problems do not occur, or at least in a lesser degree.

This objective is achieved with the method according to the invention which is characterized in that the insertion is in response to an insertion request from said message server to said IPTV network. Instead of waiting for a suitable time interval indicated by abovementioned markers, the message server itself sends an insertion request to the IPTV network. In response to this request the IPTV network will insert the message stream into the multimedia stream that is was broadcasting and or delivering. Because the initiative now lies with the message server, this approach is very suitable for messages that require immediate broadcasting and or delivery, e.g. messages from the police department, fire department etc.

It should be noted that the term insertion relates to the perception of the end-user who will notice that content is inserted in the original stream. Insertion techniques are known in the art and could comprise the actual replacement of packets or the switching between streams.

The insertion itself can comprise replacing at least part of said multimedia content stream by said multimedia message stream. In this way, content broadcasted and or delivered at the time when the message is inserted is lost for the end-user. However, this approach requires the least amount of modifications to existing hardware and or network topologies.

To avoid problems with loosing content, the streaming of said multimedia content can be interrupted prior to the insertion of said multimedia message stream. For instance, an interrupt request can be sent to the video head-end to interrupt the broadcast and or delivery of the multimedia stream. This interrupt request could be sent by the message server or by the network element, e.g. DSLAM, aggregation switch, it has directed its insertion request to. After the message has been inserted, the regular stream can be resumed.

There are several ways to initiate resuming of the regular stream. The message server could send a resume request to the video head-end. This task could also be performed by the network element at which the insertion request was targetted, which, in this case, could be based on a request received from the message server, or it could be based on a detection of the end of the message.

An additional or further possibility can be obtained if said insertion request initiates a recording of said multimedia content stream on a recording system. A Personal Video Recorder (PVR) system or a network Personal Video Recoder (nPVR) could be used to record the multimedia content stream. After the message is finished, the stored content thereon could be streamed to the end-user.

The recording system could be linked to the video head-end. It could however also be linked to the network element that performs the insertion. The latter option reduces the amount of bandwidth that is needed in between the insertion network element and the video head-end. Furthermore, present nPVRs and or PVRs are already placed at similar positions in the network.

The present invention is particularly useful for multicast systems, in which a single stream is directed to many users simultaneously. However, it is also applicable to other forms of content delivery such as unicast, e.g. video-on-demand and or near video-on-demand. It can even be applied in the area of digital video broadcasting (DVB).

In a typical IPTV network, content streamed from the video head-end is duplicated into a plurality of streams targetted at a plurality of end-users. This functionality can be provided by DSLAMs. According to the present invention, the insertion of the message can be conducted on part of said plurality of streams.

This approach is particularly useful if the message is not distributed to all the users but to a limited amount, e.g. users living in a certain geographical area.

It is advantageous if the insertion is performed in or near a DSLAM in the IPTV network. In this case, the insertion request is directed to a DSLAM. According to the present invention, the DSLAM would interrupt the regular broadcasting and or content delivery in response to an insertion request. Additionally, the receipt of this request could be acknowledged by an acknowlege message from the DSLAM to the message server. Subsequently, the message would be streamed via said DSLAM. After the message is finished, regular broadcasting and or content delivery could be resumed. The latter could be initiated by a resume request from the message server. Additionally or alternatively, a finish message could be sent from the message server to the DSLAM. The DSLAM would then in turn send a resume request to the video head-end in case the broadcast and or content delivery was interrupted in response to the insertion request. The latter request could also have been sent by the message server.

If a recorder is used to record the regular broadcast and or delivered content, the DSLAM could initiate a recording by sending a recording request to a recorder. When the broadcasting and or delivery is resumed, the corresponding content could be streamed from said recorder. In this way, the loss of content can be avoided or minimalized.

The present invention further provides a DSLAM for implementing the abovementioned method. A known DSLAM is arranged to distribute a multimedia content stream received at its multimedia input. According to the present invention, the DSLAM is responsive to an insertion request and comprises a second input and means to insert multimedia content received at said second input into said multimedia content stream in response to said insertion request. The insertion could also be done automatically when the DSLAM detects a stream at its second input. The second input could for instance be connected to the message server. It should be noted that the second input merely relates to the fact that two different streams are fed to the DSLAM. The present invention does not exclude the possibility that one physical input is used for both streams.

To enable the control of a recorder, it is advantageous if the DSLAM comprises an algorithm and means to initiate and send a recording request to a recorder, in response to said insertion request, to record said multimedia content stream.

In the following, the present invention will be discussed in more detail with reference to the accompanying drawings in which:
Figure 1 is an ad-inserting network known in the art;
Figure 2 is a first embodiment of the present invention wherein a recorder is linked to the video head-end;
Figure 3 is a second embodiment of the present invention wherein a recorder is linked to the DSLAM; and
Figures 4A-C schematically illustrate several possible layouts of the content stream according to the present invention.

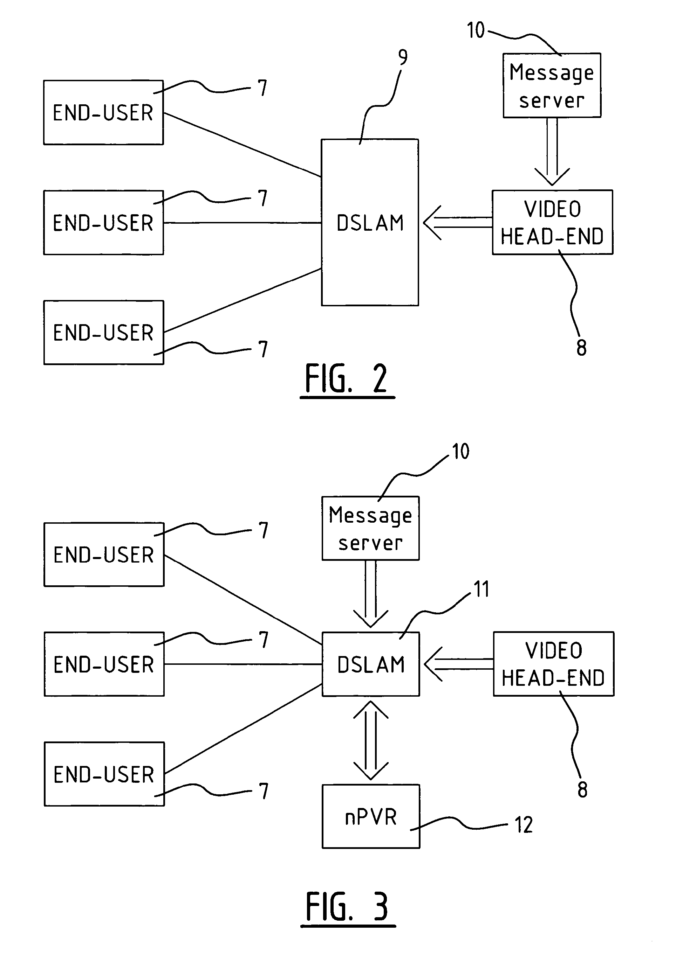

In the embodiment in figure 2, a video head-end 8 is connected to multiple DSLAMs 9, of which only one is shown. The DSLAM 9 is in turn connected to multiple end-users 7. A message server 10 communicates directly with the video head-end. In this case, the insertion request initiates an interrupt in the broadcasting and or content delivery of the regular video stream. The video head-end could acknowledge this request and interrupt the broadcasting and or delivery. After the message has finished, the message server could send a finish message to the video head-end, which could consequently resume the regular broadcast and or content delivery.

Because the message is streamed via the video head-end, the message is received by all the users connected to the video head-end.

Although it is stated that the message is streamed via the video head-end, the present invention does not exclude including known network elements, e.g. switches or routers, to switch between the different streams.

By connecting the message server 10 to a DSLAM 11, as indicated in figure 3, only users 7 connected to that specific DSLAM receive the message. This enables specific targetting of messages. Also indicated in figure 3, is a nPVR 12 connected to the DSLAM 11. The DSLAM could instruct the nPVR to record the broadcasted and or delivered content stream in response to an insertion request from the message server. After the message is finished, the DSLAM can decide to forward the regular video stream by means of a resume request sent to the video head-end 8 in case the broadcast and or content delivery was interrupted, or by merely forwarding the incoming video stream. A drawback of interrupting the original stream is that the interruption could apply to more users than those connected to DSLAM 11.

However, the DSLAM 11 could also decide to instruct the recorder 12 to play the recorded stream by means of sending out a play request and forwarding this content instead of the regular video stream. Most likely, the recorder 12 would simultaneously record the regular video stream and stream out the recorded stream but with a certain time offset corresponding to the duration of the message.

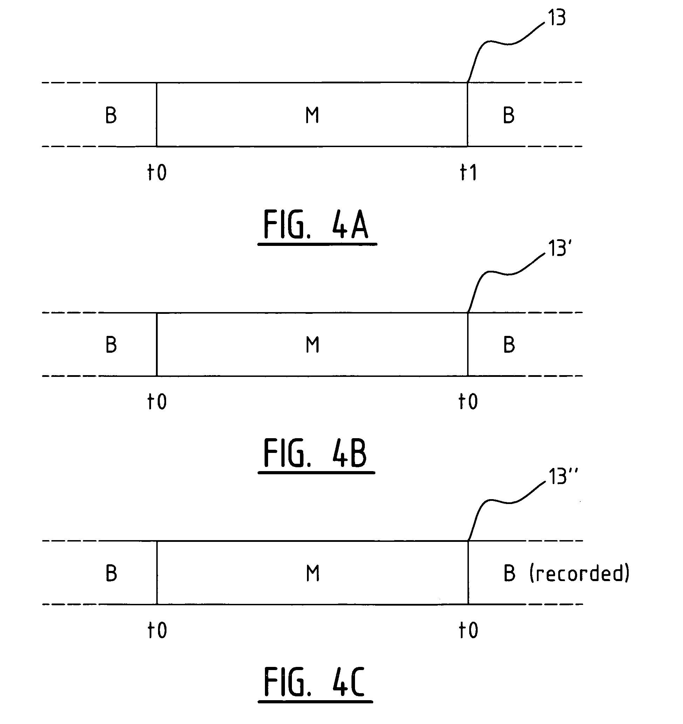

Figure 4A-C illustrate possible different sequences 13, 13', 13" of streams according to the present invention. In figure 4A, a broadcasted and or delivered stream (B) is interrupted by a message (M) at time t0 calculated from the beginning of the stream. After message M has finished, the broadcasted and or delivered stream is resumed. However, in this case, the original stream was not interrupted like depicted in figure 4B. Consequently, there is some loss in content corresponding to the duration of the message (t1-t0). Finally, figure 4C illustrates the situation in which a recorder is used to record the original stream once the message is sent. Resuming the original broadcast and or content delivery in this case also eliminates the loss of content, however as stated, the resumed stream originates from the recorder and not directly from the video head-end.

The present invention has been described in detail referring to specific embodiments thereof. However, the skilled person in the art may recognize that modifications, additions, or adjustments can be made without deviating from the scope of the present invention as defined by the following claims.

## Claims

1. A method to insert a multimedia message stream stored on a message server into multimedia content that is streamed by an IPTV network, **characterized in that** said insertion is in response to an insertion request from said message server to said IPTV network.

2. The method according to claim 1, **characterized in that** said insertion comprises replacing at least part of said multimedia content stream by said multimedia message stream.

3. The method according to claim 1, **characterized in that** said streaming of said multimedia content is interrupted prior to insertion of said multimedia message stream.

4. The method according to claim 1, **characterized in that** said insertion request initiates a recording of said multimedia content stream on a recording system.

5. The method according to claim 1, **characterized in that** said multimedia content stream comprises a multicast stream.

6. The method accoring to claim 1, comprising the duplication of said multimedia content stream into a plurality of streams targetted at a plurality of end-users, **characterized in that** said insertion is conducted on part of said plurality of streams.

7. The method according to claim 1, **characterized in that** said insertion request is directed to a DSLAM in said IPTV network, and that said method further comprises the steps of:
- interrupting the regular content delivery by said DSLAM;
- streaming of said multimedia message from said multimedia server via said DSLAM; and
- resuming said regular content delivery by said DSLAM.

8. The method according to claim 7, **characterized in that** prior to streaming of said multimedia message, a recording of said regular content delivery by a recorder has been initiated in response to a recording request sent to said recorder by said DSLAM, and **in that** content corresponding to said resuming of said regular content delivery corresponds to content stored on said recorder in response to said recording request.

9. A DSLAM for implementing the method according to claim 7, said DSLAM being arranged to distribute a multimedia content stream received at a first input, **characterized in that** said DSLAM is responsive to an insertion request and comprises a second input and means to insert multimedia content received at said second input into said multimedia content stream in response to said insertion request.

10. The DSLAM according to claim 9, **characterized in that** said DSLAM comprises an algorithm and means to initiate and send a recording request to a recorder, in response to said insertion request, to record said multimedia content stream.
